# EUROPEAN PATENT APPLICATION

(11) **EP 3 036 989 A1**
(43) Date of publication of application: **29.06.2016**
(21) Application number: 15160324.8
(22) Date of filing: 23.03.2015
(51) Int. Cl.: A01G 31/00

(54) **PLANT CULTIVATION DEVICE**

(30) Priority: 26.12.2014 TW 103145867
(71) Applicant: Cal-Comp Biotech Co., Ltd., New Taipei City 222 (TW)
(72) Inventor: Chiu, Wei-Hao, 222 Shenkeng Dist., New Taipei City (TW); Huang, Hsiu-Chi, 222 Shenkeng Dist., New Taipei City (TW)
(74) Representative: 2K Patentanwälte Blasberg Kewitz & Reichel

(57) **Abstract**

A plant cultivation device for securing and planting a plant seed (10) is provided. The plant cultivation device includes an elastic support structure (100) and a capillary absorbent structure (200). The capillary absorbent structure (200) encloses the plant seed (10). The capillary absorbent structure (200) is enclosed by the elastic support structure (100), and a portion of the capillary absorbent structure (200) is exposed from the elastic support structure (100). Thereby, the plant cultivation device allows easy package and transportation and easy usage.

## Description

### BACKGROUND

### Technical Field

The technical field relates to a plant cultivation device and, in particular, to a plant cultivation device including an elastic support structure and a capillary absorbent structure.

### Related Art

The conventional way to plant hydroponic vegetables in recent years utilizes a load tray to hold plant seeds. The load tray is disposed in a water tray to supply water to the plant seeds. The load tray includes a plurality of containers for containing the plant seeds. The container has a hole which allows the plant seed to absorb water from the water tray. The plant seed is secured in the container by using a sponge. The sponge is cut to form a cut groove to sandwich the plant seed therein. The sponge is inserted into the container, so that the plant seed is secured inside the container. The sponge not only functions to secure and support the plant seed, but also functions to absorb water and supply the same to the plant seed.

A dry sponge has to be squeezed to expel the air in its holes, and then the squeezed dry sponge is immersed and released in the water. When the sponge expands, a siphonage force is generated to absorb water into the holes of the sponge. The sponge absorbs water by siphonage, so a dry sponge cannot absorb water by itself. In conventional transportation methods, the plant seeds, the dry sponge, and the load tray have to be packaged separately. The user has to immerse the dry sponges in the water one by one to absorb water. Then, the seeds are inserted into respective ones of the sponges, and the wet sponges are inserted into the containers of the load tray respectively. Therefore, package, transportation and usage are inconvenient.

In view of the foregoing, the inventor made various studies to improve the above-mentioned problems to overcome the above-mentioned drawback, on the basis of which the present disclosure is accomplished.

### BRIEF SUMMARY

It is an object of the present invention, to provide an enhanced plant cultivation device that can overcome the above drawbacks and enables particularly a more convenient package, transportation and usage.

This problem is solved by a plant cultivation device according to claim 1. Further advantageous embodiments are the subject-matter of the dependent claims.

A plant cultivation device according to the present invention thus includes an elastic support structure and a capillary absorbent structure.

According to a first exemplary embodiment of the present disclosure, a plant cultivation device of the present invention provides for securing and planting a plant seed. The plant cultivation device comprises an elastic support structure and a capillary absorbent structure. The capillary absorbent structure is used to enclose the plant seed. The elastic support structure encloses the capillary absorbent structure, and a portion of the capillary absorbent structure is exposed from the elastic support structure.

Preferably, the plant cultivation device comprises a load tray and a water tray. The elastic support structure is secured at the load tray. The load tray is disposed at the water tray. According to a further embodiment, the load tray may include a container, and the elastic support structure may be contained in the container. According to a further embodiment, a bottom of the container may include a through hole. According to a further embodiment, the container may be contained in the water tray. According to a further embodiment, the elastic support structure may further include a cut groove, and the capillary absorbent structure may be sandwiched in the cut groove. According to a further embodiment, the elastic support structure may be a sponge. According to a further embodiment, the capillary absorbent structure may consist of fiber. According to a further embodiment, the capillary absorbent structure can be a swab.

According to the plant cultivation device of the present disclosure, the plant seed is secured in advance at the load tray by the elastic support structure to facilitate transportation after package. Thereby, the user only needs to place the load tray at the water tray, so that the capillary absorbent structure can absorb water, thereby allowing easy usage.

### BRIEF DESCRIPTION OF THE DRAWINGS

- Fig. 1: is a perspective exploded view showing a plant cultivation device according to a preferable embodiment of the present disclosure.
- Fig. 2: is a schematic view showing the plant cultivation device according to the preferable embodiment of the present disclosure.
- Fig. 3: is a partial perspective exploded view of the plant cultivation device according to the preferable embodiment of the present disclosure.
- Fig. 4: is a partial perspective view of the plant cultivation device according to the preferable embodiment of the present disclosure.
- Fig. 5: is another partial perspective view of the plant cultivation device according to the preferable embodiment of the present disclosure.
- Fig. 6: is a partial schematic view of the plant cultivation device according to the preferable embodiment of the present disclosure.
- Fig. 7: is a use state view of the plant cultivation device according to the preferable embodiment of the present disclosure.
- Fig. 8: is another use state view of the plant cultivation device according to the preferable embodiment of the present disclosure.

### DETAILED DESCRIPTION

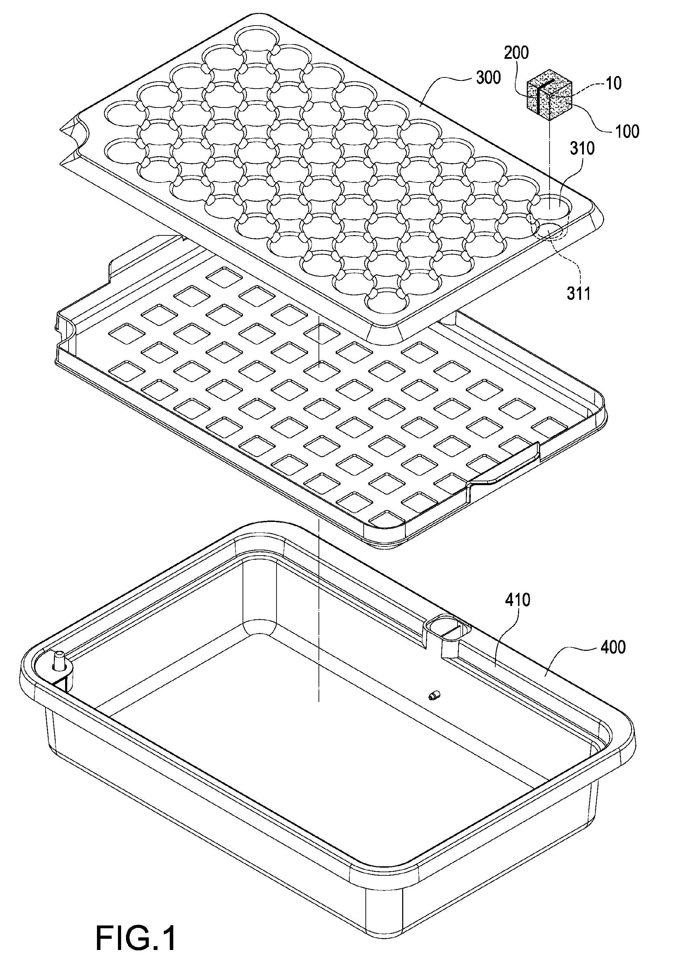

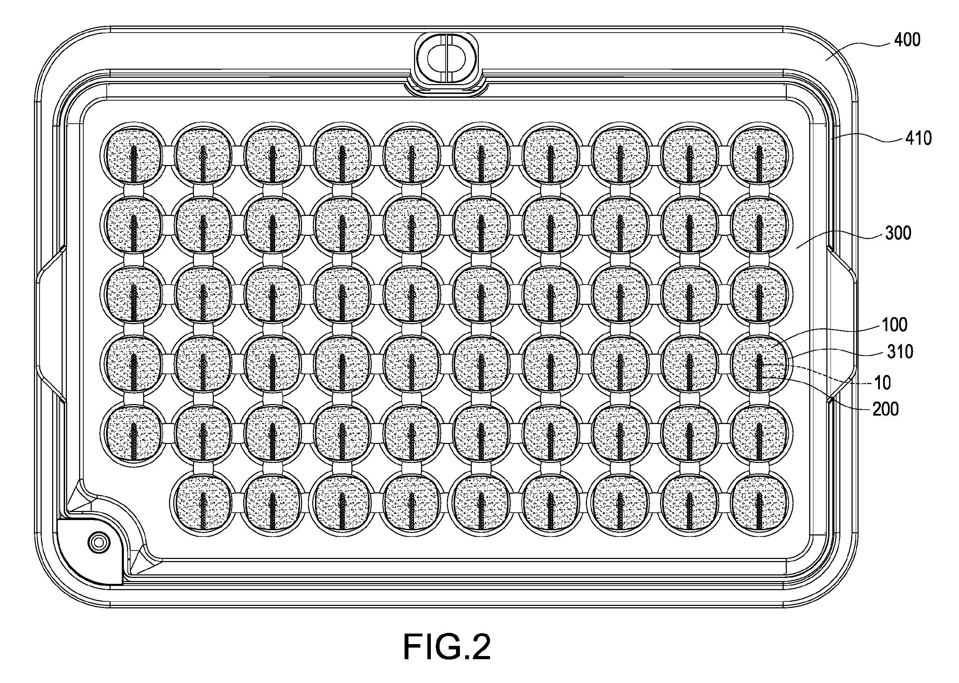

Please refer to Figs. 1 and 2 showing a plant cultivation device according to a preferable embodiment of the present disclosure. The plant cultivation device is adapted to secure and plant a plant seed 10. The plant cultivation device comprises at least one elastic support structure 100, at least one capillary absorbent structure 200 corresponding to the elastic support structure 100, a load tray 300, and a water tray 400.

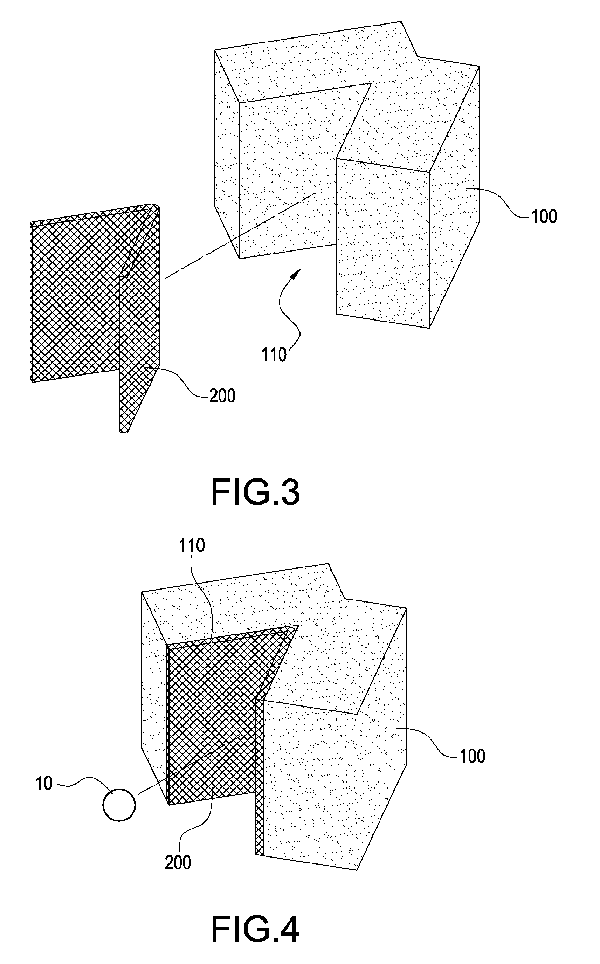

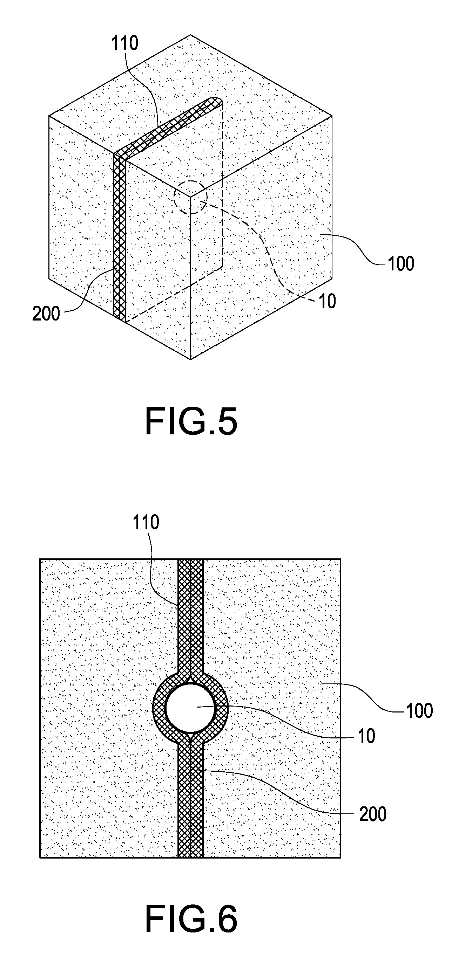

Referring to Figs. 3 to 6, in the present embodiment, the plant cultivation device of the present disclosure preferably includes a plurality of elastic support structures 100. Each of the elastic support structures 100 is adapted to secure at least one plant seed 10. The elastic support structure 100 preferably consists of a sponge. The elastic support structure 100 includes a cut groove 110. The cut groove 110 can be opened by bending the elastic support structure 100.

According to the present embodiment, the plant cultivation device of the present disclosure includes a plurality of capillary absorbent structures 200 corresponding to the elastic support structures 100. Each of the capillary absorbent structures 200 is adapted to enclose at least one plant seed 10. The capillary absorbent structure 200 can absorb water by means of the capillary force, so that water required to grow the plant seed 10 can be supplied to the plant seed 10 enclosed in the capillary absorbent structure 200. The capillary absorbent structure 200 is sandwiched in the cut groove 110 of the corresponding elastic support structure 100. The elastic support structure 100 encloses the capillary absorbent structure 200 to secure the plant seed 10. At least one portion of the capillary absorbent structure 200 is exposed from the elastic support structure 100. The capillary absorbent structure 200 consists of waved fibers. According to the present embodiment, it is preferable that the capillary absorbent structure 200 is a swab.

Referring to Figs. 1 and 2, in the present embodiment, the load tray 300 is preferably made of plastic. A plurality of containers 310 are formed on the load tray 300. A bottom of each of the container 310 includes a through hole 311. The containers 310 are arranged in a rectangular array; however, the present disclosure is not limited thereto. The water tray 400 is adapted to hold water. The load tray 300 is disposed on an opening 410 of the water tray 400, and each container 310 on the load tray 300 is accommodated in the water tray 400.

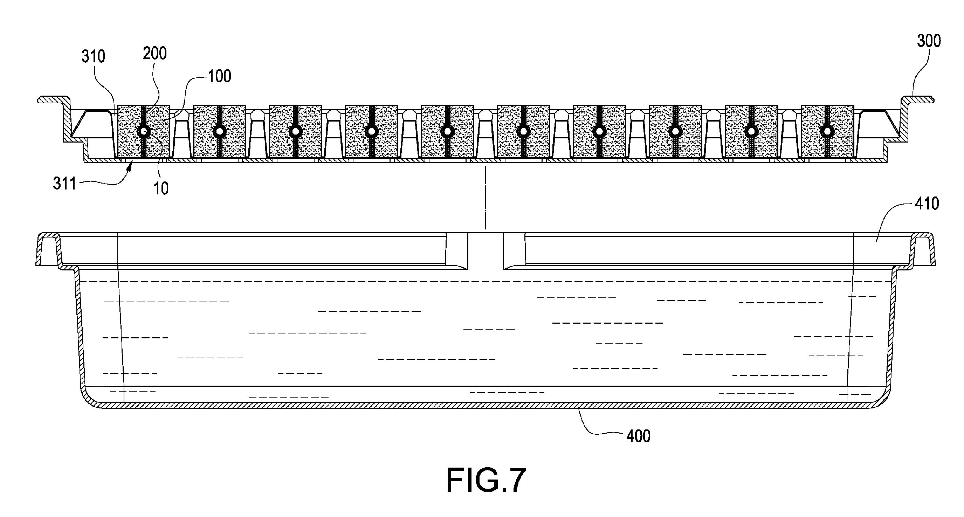

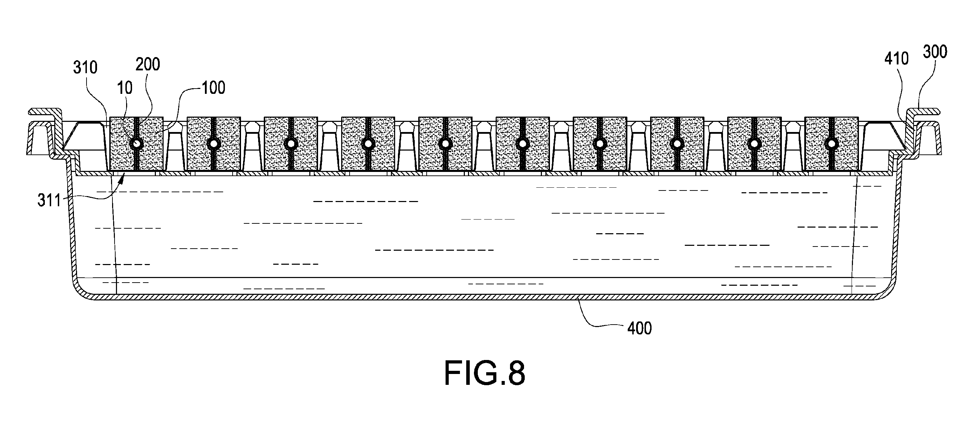

Referring to Fig. 7, in the present embodiment, the plant seed 10 is enclosed in the capillary absorbent structure 200 and sandwiched in the elastic support structure 100 in advance. Each elastic support structure 100 is disposed in a respective one of the containers 310 of the load tray 300 to be secured. Referring to Fig. 8, when the load tray 300 is disposed on the water tray 400 holding water therein, each of the containers 310 is immersed in the water, and water can pass through the through hole 311 of the container 310 to enter the container 310. The exposed capillary absorbent structure 200 contacts water in the water tray 400 and absorbs water to supply the same to the plant seed 10. Furthermore, when the water absorbed by the capillary absorbent structure 200 is filled into sponge holes of the elastic support structure 100, the sponge of the elastic support structure 100 continues absorbing water to supply the same to the plant seed 10 by siphonage.

By using the plant cultivation device of the present disclosure, the plant seed 10 is secured in advance at the load tray 300 by the elastic support structure 100 to facilitate transportation after package. The user only needs to place the load tray 300 in the water tray 400. Compared with conventional techniques which need to immerse the sponges in water one by one and place them in the load tray 300 separately, the plant cultivation device of the present disclosure allows easy transportation and easy usage.

## Claims

1. A plant cultivation device for securing and planting a plant seed (10), comprising:
an elastic support structure (100); and
a capillary absorbent structure (200) for enclosing the plant seed (10), the elastic support structure (100) enclosing the capillary absorbent structure (200), a portion of the capillary absorbent structure (200) being exposed from the elastic support structure (100).

2. The plant cultivation device of claim 1, further comprising a load tray (300), the elastic support structure (100) being secured at the load tray (300).

3. The plant cultivation device of claim 2, further comprising a water tray (400), the load tray (300) being disposed at the water tray (400).

4. The plant cultivation device of claim 2, wherein the load tray (300) includes a container (310), and the elastic support structure (100) is contained in the container (310).

5. The plant cultivation device of claim 4, wherein a bottom of the container (310) includes a through hole (311).

6. The plant cultivation device of claim 5, further comprising a water tray (400), the load tray (300) being disposed at the water tray (400), and the container (310) being contained in the water tray (400).

7. The plant cultivation device of any of the preceding claims, wherein the elastic support structure (100) is a sponge.

8. The plant cultivation device of any of the preceding claims, wherein the capillary absorbent structure (200) consists of fiber.

9. The plant cultivation device of claim 8, wherein the capillary absorbent structure (200) is a swab.

10. The plant cultivation device of any of the preceding claims, wherein the elastic support structure 100 includes a cut groove (110), and the capillary absorbent structure (200) is sandwiched in the cut groove (110).
